# EUROPEAN PATENT APPLICATION

(11) **EP 3 670 856 A1**
(43) Date of publication of application: **24.06.2020**
(21) Application number: 18214209.1
(22) Date of filing: 19.12.2018
(51) Int. Cl.: F01N 3/20, F01N 13/00

(54) **EXHAUST GAS AFTERTREATMENT SYSTEM**

(71) Applicant: Winterthur Gas & Diesel Ltd., 8401 Winterthur (CH)
(72) Inventor: Kadau, Dirk, 8046 Zürich (CH); Brutsche, Martin, 8418 Schlatt (CH)
(74) Representative: Hepp Wenger Ryffel AG

(57) **Abstract**

The present invention is directed to an exhaust gas aftertreatment system (10) for a combustion engine having at least one cylinder, preferably a large vessel engine with at least one cylinder having an inner diameter of at least 200mm. The exhaust gas aftertreatment system (10) comprises a first catalyst (1) and a second catalyst (2), wherein the first catalyst has a chemical composition different from the second catalyst and/or the first catalyst (1) has its optimal operation performance, in particular a NOₓ reducing performance, at a first engine load value and the second catalyst (2) has optimal operation performance, in particular a NOₓ reducing performance, at a second engine load value, wherein the first engine load value is different from the second engine load value; and/or the first catalyst (1) has its optimal operation performance, in particular a NOₓ reducing performance, at a first temperature and the second catalyst (2) has its optimal operation performance, in particular a NOₓ reducing performance, at a second temperature, wherein the first temperature is different from the second temperature and/or the first catalyst (1) is capable for reducing a noxious substance, in particular a NOₓ content, due to a first chemical reaction and the second catalyst (2) is capable for reducing a noxious substance, in particular a NOₓ content, due to a second chemical reaction, wherein the first chemical reaction is different from the second chemical reaction.

## Description

The present invention is directed to an exhaust gas aftertreatment system for a combustion engine having at least one cylinder, preferably a large vessel engine with at least one cylinder having an inner diameter of at least 200mm, to an internal combustion engine and to a method for reducing of a noxious emission of an internal combustion engine.

The invention relates to the technical field of combustion engines and the reduction of their emissions.

The present invention preferably relates to an internal combustion engine like a large marine or ship engine or a stationary engine whose cylinders have an inner diameter of at least 200 mm. The engine preferably is a two-stroke engine or a two-stroke cross head engine. The engine can be a diesel or a gas engine, a dual fuel or a multi fuel engine. Burning of liquid and or gaseous fuels in such engines is possible as well as self-igniting or forced igniting.

The internal combustion engine can be a longitudinally flushed two-stroke engine.

The term internal combustion engine also refers to large engines which can be operated not only in diesel mode, which is characterized by the self-ignition of the fuel, but also in Otto mode, which is characterized by the positive ignition of the fuel, or in mixtures of the two. Furthermore, the term internal combustion engine includes in particular dual-fuel engines and large engines in which the self-ignition of the fuel is used for the positive ignition of another fuel.

Engine speed is preferably below 800 RPM (4-stroke) and more preferably below 200 RPM (2-stroke) which indicates the designation of low speed engines.

Fuel can be diesel or marine diesel oils or heavy fuel oils or emulsions or slurries or methanol or ethanol as well as gases like liquid natural gas (LNG) liquid petrol gas (LPG) and so on.

Further possible fuels which might be used: LBG (Liquefied Biogas), Biological Fuels (e. g. Oil obtained from algae), Hydrogen, Synthetic fuels from CO2 (e. g. made by Power-To-Gas or Power-To-Liquid).

Large ships, in particular vessels for transport of goods, usually are powered by internal combustion engines, in particular diesel and/or gas engines, mostly two-stroke, cross head engines. In case of liquid fuel, like heavy fuel oil, marine diesel oil, diesel or other liquids, as well as in case of gaseous fuels, like LNG, LPG or others, being burned by the engine, the exhaust from this combustion process needs to be cleaned to comply with the existing rules such as IMO Tier III.

The IMO emission standards commonly referred to as Tier I ... III standards inter alia define the NOₓ emission standards for existing and new marine engines.

For large ships the emissions requirements have been increasing, in particular with regard to the nitrogen oxide emissions. Thus, there is a need to reduce the amount of nitrogen oxides in the exhaust gas emitted by the internal combustion engines of these ships.

SCR (selective catalytic reduction) technology is used to reduce the level of nitrogen oxides (NOₓ) in an exhaust gas of a combustion engine. SCR is commonly used in land based engines, e.g. heavy duty vehicles, industrial plants and other applications. SCR technology has also been used in marine environments in combination with two-stroke diesel engines. Due to regulatory requirements for said marine diesel engines and land based engines, there is an increased need for efficient SCR systems.

SCR may be based on the reduction of nitrogen oxides in an exhaust gas with ammonia (NH₃) in an SCR catalyst. Typically, ammonia is generated by injecting an ammonia precursor substance, such as a urea solution, into the exhaust gas of the combustion engine. The urea solution for example is sprayed via nozzles into the hot exhaust gas, where the liquid urea solution reacts to ammonia, carbon dioxide and water vapour. The ammonia then reduces the nitrogen oxides under the influence of a catalyst in an SCR reactor to nitrogen (N₂) and water (H₂O). The generation of ammonia from liquid urea is endothermic. Thus, decomposition of the urea solution is only complete and the nitrogen oxides (NOₓ) are only reduced to nitrogen (N₂), if the exhaust gas is sufficiently hot.

EP3149298 B1 discloses an aftertreatment system, in which a hydrolysis catalytic converter is assigned to a dosing device for adding an ammonia precursor substance. By way of the hydrolysis catalytic converter, the conversion of the ammonia precursor substance into ammonia upstream of the SCR catalyst can be improved or promoted.

One problem of the known SCR reactors in combustion engines is to sufficiently reduce the NOₓ content. Therefore large volume SCR reactors are needed, in which the exhaust gas has a sufficient residence time. Large volume SCR reactors need a lot of space and are cost intensive.

Catalysts typically being used for SCR technology either comprise Vanadium, Tungsten supported by TiO₂ or are metal substituted Zeolites, like for example Cu/Zeolite or Fe/Zeolite. Vanadium promotes oxidization of NOₓ. However, the Vanadium content has to be kept low, because otherwise at high engine loads and respective high temperatures, SO₂ is oxidized to SO₃, when above a certain concentration, SO₃ creates a blue plume of sulphuric acid in and downstream of the funnel, which has to be prevented at any cost. Higher Vanadium contents may also lead to oxidation of NH₃ to NOₓ at temperatures of above 350°C. Thus, more reducing agent has to be injected. Furthermore, higher Vanadium contents and especially the combination of Vanadium and Tungsten encourage an increased production of N₂O at temperatures of above 350°C.

The performance of SCR catalysts is highly depending on temperature. It is therefore known to use exhaust gas aftertreatment systems with two or more parallel arranged SCR catalysts. The aftertreatment system may allow selective operation of certain parts of the system and only a reduced number of SCR reactors during a heating-up time. The total heat energy of the exhaust gas is heating up the used volume faster than it would be in the case of the complete volume.

It is therefore an object of the present invention to prevent the drawbacks of the prior art and to create an exhaust gas aftertreatment system, an internal combustion engine and a method for reducing NOₓ emissions of an internal combustion engine ensuring reduced operational costs, a reduced size of the aftertreatment system, a minimized emission of side-reaction products, such as N₂O and SO₃ and/or a reduced dosing of a reducing agent, such as ammonia or an ammonia precursor substance.

The object is achieved by an exhaust gas aftertreatment system for a combustion engine comprising at least a first catalyst and a second catalyst.

The combustion engine has at least one cylinder. Preferably the combustion engine is a large vessel engine with at least one cylinder having an inner diameter of at least 200mm.

The first catalyst has chemical composition different from the second catalyst.

The first catalysts may comprise a substance having a first chemical composition and the second catalyst may comprise a substance with second chemical composition different from the first chemical composition.

The first and the second catalyst may comprise support structures of different materials. Alternatively, the first and the second catalysts may comprise support structures of the same material and the support structures may have a different coating or doping.

The catalysts may comprise different Vanadium contents. One of the catalysts may be a zeolite based catalysts, such as Cu/Fe zeolite catalysts. One of the catalysts may comprise a metallic substrate with a first coating. The second catalyst may comprise a second coating different from the first coating.

Alternatively or additionally, the first catalyst has its optimal operation performance, in particular a NOₓ reducing performance, at a first engine load value and the second catalyst has optimal operation performance, in particular a NOₓ reducing performance, at a second engine load value, wherein the first engine load value is different from the second engine load value.

Alternatively or additionally, the first catalyst has its optimal operation performance, in particular a NOₓ reducing performance, at a first temperature and the second catalyst has its optimal operation performance, in particular a NOₓ reducing performance, at a second temperature, wherein the first temperature is different from the second temperature.

The first catalyst may be a zeolite catalyst having its optimal NOₓ reducing performance at a lower temperature than a second catalyst comprising Vanadium or Tungsten supported by TiO₂.

Alternatively or additionally, the first catalyst is capable for reducing a noxious substance, in particular a NOₓ content, due to a first chemical reaction and/or due to a first catalyst material and the second catalyst is capable for reducing a noxious substance, in particular a NOₓ content, due to a second chemical reaction and/or due to a second catalyst material, wherein the first chemical reaction is different from the second chemical reaction and/or the first catalyst material is different from the second catalyst material.

Hence, the first catalyst and the second catalyst are from a different type, wherein the type may be defined by the chemical composition and/or the optimal operation performance with respect to the engine load and/or temperature and/or by the reducing capability due to the respective chemical reaction and/or due to different catalyst materials.

The exhaust gas aftertreatment system comprises at least two catalysts of a different type.

The exhaust gas aftertreatment system may comprise further catalysts, wherein a part of the catalysts may be of the same type, and/or there may be more than two catalysts of different type each.

Each catalyst of a specific type may be optimized for a specific operation condition, such as a temperature window, an engine load window and/or a specific composition of the exhaust gas. Typically an operation condition changes during the course of operation. Temperature and/or engine load may rise or lower, exhaust gas may change its composition due to the working temperature or due to a changed fuel.

For each operation condition the exhaust gas aftertreatment system may provide an optimal catalyst performance.

As an optimal catalyst is offered for every operation condition, emissions can be minimized over the total operation range of an engine.

As an appropriate catalyst or catalyst combination can be chosen for every operation situation emission of side products can be minimized, no undue catalyst space has to be provided and no undue reducing agent has to be dosed in. Hence, the operational costs can be minimized.

The catalyst performance may be specified by the capability of reducing a noxious substance. Thus, the NOₓ reducing performance may be a measure for the catalyst performance.

The catalyst performance may also be specified by the capability of avoiding undesired side products, such as SO₃ or N₂O.

At least one of the catalysts may by a SCR catalyst which typically comprises Vanadium, Tungsten supported by TiO₂ or are metal substituted Zeolites, like for example Cu/Zeolite or Fe/Zeolite.

The exhaust gas aftertreatment system may comprise a dosing unit for a reducing agent, such as ammonia or an ammonia precursor substance, for example urea.

The dosing unit may also be arranged upstream of the exhaust gas aftertreatment system.

The first and the second catalysts may be SCR catalysts comprising different contents of Vanadium.

The Vanadium content of the first catalyst may be higher or equal than 0.3%, preferably higher or equal 0.5%, more preferably higher or equal 0.7%. The percentage refers to the total weight of a catalyst coating. The Vanadium content of the second catalyst may be lower than 0.3%.

During low engine loads and/or lower temperatures the first catalyst with a higher Vanadium content may be used. When temperature and/or engine load rises, the second catalyst with a lower Vanadium content may be used.

The exhaust gas aftertreatment system may comprise more than two SCR catalysts each having a different Vanadium content.

Catalysts of different types may be arranged parallel and/or in series.

Preferably, the catalysts are arranged in a catalyst reactor to form a respective catalytic converter. Each catalyst may be arranged in separate catalyst reactor. More than one catalyst may be arranged in a catalyst reactor, or even all catalysts may be arranged in the same catalyst reactor.

Hence, although due to the number of catalysts the complexity of the system might increase, the catalyst reactor may allow for a low constructional effort.

The first catalyst may be a hydrolysis catalyst and the second catalyst may be an SCR catalyst, preferably arranged downstream the hydrolysis catalyst.

The hydrolysis catalyst may comprise TiO₂, whereas the SCR catalyst may comprise TiO₂ doped with tungsten oxide or vanadium oxide. Hence, the hydrolysis catalyst and the SCR catalyst have a different chemical composition.

The hydrolysis catalyst has its optimal NOₓ reducing performance at a temperature that is higher than the temperature at which an SCR catalyst has its optimal NOₓ reducing performance.

In the SCR catalyst the NOₓ content is reduced by ammonia under the influence of a catalyst to nitrogen (N₂) and water (H₂O).

The total volume of the hydrolysis catalyst and the SCR catalyst for reducing a given amount of NOx is smaller or equal than the volume of a stand-alone SCR catalyst for reducing the same amount of NOₓ. Preferably the total volume of the hydrolysis catalyst and the SCR catalyst is smaller than 400l/MW.

The SCR catalyst may be arranged in a SCR reactor. The hydrolysis catalyst may be arranged in a hydrolysis catalyse reactor. The SCR catalyst and the hydrolysis catalyst may be arranged in a common reactor.

Additionally or alternatively, the Vanadium content of the SCR catalyst is higher or equal than 0.3%, preferably higher or equal 0.5%, more preferably higher or equal 0.7%. The percentage refers to the total weight of a catalyst coating.

Additionally or alternatively, the hydrolysis catalyst and the SCR catalyst are configured for the residence time of exhaust gas in the SCR catalyst being smaller than 0.5s, more preferably smaller than 0.3s, preferably at an engine load of at least 90% and/or an exhaust gas mass flow of 2-20kg/kWh, preferably 7-11kg/kWh.

Especially the volumes of the hydrolysis catalyst and the SCR catalyst are adapted such that the short residence time achieved at full load.

Additionally or alternatively, the hydrolysis catalyst and the SCR catalyst are arranged on the same catalyst substrate.

The SCR catalyst preferably comprises Vanadium, Tungsten and/or TiO₂, preferably Vanadium and Tungsten doted TiO₂.

The hydrolysis catalyst does not only help to hydrolyze HNCO to NH3 but also to decompose urea molecules to HNCO and NH3. Furthermore, at exhaust gas temperatures which are present at high loads, not only the hydrolysis takes place within the hydrolysis catalyst, but also a side reaction, similar to an SCR reaction, wherein NOx is significantly reduced.

Thus, all NOx having been already reduced in the hydrolysis catalyst will not be present in the SCR catalyst, which is arranged downstream of the hydrolysis catalyst. The SCR catalyst therefor has to reduce only a smaller amount of NOx.

The needed volume of the complete catalysis system, comprising the hydrolysis catalyst and the SCR catalyst, for the same NOx reduction is therefore less than for a stand-alone SCR catalyst. The total volume of the catalysts may be reduced by at least 8-10% as compared to a stand-alone SCR catalyst.

Within this invention the volume of the catalyst is understood as the envelope volume of the catalyst.

Since the SCR catalyst has to reduce only a smaller amount of NOx the volume of the SCR catalyst may be smaller when it is combined with a hydrolysis catalyst, and/or the reaction time and thus, the residence time in the SCR catalyst may be shorter.

As the exhaust gas may remain in the SCR catalyst for only a short time period, the Vanadium content of the SCR catalyst may be higher as for a bigger stand-alone SCR catalyst, because the reaction time for oxidizing SO2 as well as the time for generating N2O is also smaller. Furthermore, a small SCR catalyst with a high Vanadium content may provide for the same oxidation rate of NOx as a large SCR catalyst with a low Vanadium content.

Only a small part of the NH3 is oxidized in the SCR catalyst and the major part of the NH3 is used efficiently. Thus, a lower amount of NH3 has to be provided. The risk of providing an exceeding amount of NH3, which might be oxidized to NOx in the SCR catalyst or which remains as an ammonia slip, can be reduced. Overdosing of urea can be prevented.

For low engine loads and respective lower temperature, the biggest part of the "SCR reaction", and thus, the biggest part of the NOx reduction takes part in the SCR catalyst. However, during lower loads, the hydrolysis catalyst at least provides hydrolysis from HNCO to NH3, such that this reaction does not have to take place in the SCR catalyst and no space has to be provided for hydrolysis in the SCR catalyst. Since the hydrolysis catalyst also helps to decompose the urea, such that nearly all of the injected urea is in the form of NH3 at the entrance of the SCR catalyst, no extra volume has to be provided in the SCR catalyst.

Especially for lower loads an SCR catalyst comprising a high Vanadium content, namely higher that 0.3%, preferably higher or equal 0.5%, more preferably higher or equal 0.7%, has a very high activity and therefore also a small SCR catalyst may reach the same performance as a bigger SCR catalyst with a lower Vanadium content.

At higher engine load operation, the hydrolysis catalyst still provides hydrolysis of HNCO to NH3, but provides for most of the NOx reduction. Only a small amount of NOx which is not reduced inside the hydrolysis catalyst will be reduced in the SCR catalyst.

An even more compact arrangement can be achieved, when the hydrolysis catalyst and the SCR catalyst are configured as one device, for example by being arranged on the same catalyst substrate. The exhaust gas may directly flow from the hydrolysis catalyst to the SCR catalyst.

The catalyst substrate may be metallic or ceramic. The substrate may be coated. For example the inlet of the catalysis device may be coated only with TiO2, while the downstream part of the substrate is coated with Vanadium, Tungsten and TiO2.

The exhaust gas aftertreatment system may also comprises a hydrolysis catalyst which hydrolysis catalyst is capable of reducing the concentration of NOx in the hydrolysis catalyst by at least 5%, preferably by at least 10%, more preferably by at least 20%, at a temperature of at least 420°C and/or an engine load of at least 90% and/or an exhaust gas mass flow of 2-20kg/kWh, preferably 7-11kg/kWh. The hydrolysis catalyst preferably is dimensioned such that the desired performance in NOx reduction is achieved.

The hydrolysis catalyst may comprise TiO2 and/or ZrO2 and/or Al2O3 and/or SiO2 and/or H-ZSM-5.

The hydrolysis catalyst and the SCR catalyst may be arranged on the same catalyst substrate.

Depending on applicable rules, type of fuel, power level of the engine, temperature, desired output and further factors the exhaust needs to be treated with different systems. Therefore, the exhaust may be divertible in different directions within the exhaust system of a ship engine.

In a beneficial embodiment the exhaust gas aftertreatment system comprises at least one bypass separation device upstream of the first catalyst and the second catalyst.

A first bypass exhaust line and a second bypass exhaust line are connected to the at least one bypass separation device. The at least one bypass separation device is configured to separate the exhaust gas upstream the first catalyst and the second catalyst into a first gas stream for the first bypass exhaust line and a second gas stream for the second bypass exhaust line. The first catalyst and the second catalyst are arranged in the first bypass exhaust line downstream of the separation bypass device.

Thus, a bypass is provided, which provides branching off at least a part of the exhaust gas, such that this part does not enter the first catalyst and the second catalyst.

There may be arranged more than two catalysts in the first bypass exhaust line.

The first bypass exhaust line and the second bypass exhaust line may get together downstream the catalysts, such that the first and second gas stream merge in one line.

Preferably the exhaust gas aftertreatment system comprises a bypass adjustment device for setting the throughput of the first bypass exhaust line and the second bypass exhaust line.

The bypass adjustment device may be implemented by least one bypass adjustment valve for opening and closing the first bypass exhaust line and/or the second bypass exhaust line.

There may be one valve each for the first bypass exhaust line and the second bypass exhaust line. Hence, a desired proportion of the total exhaust gas leaving the cylinder may be guided through the first bypass exhaust line and thus, through the first catalyst and the second catalyst.

The complete catalysis system, comprising the first catalyst and the second catalyst, may be separated for example in Tier II mode, defining situations, in which a higher NOₓ level may be considered acceptable, such that the complete exhaust gas does not pass the catalysts.

Advantageously the exhaust gas aftertreatment system comprises a control unit for controlling the throughput of the first bypass exhaust line and the second bypass exhaust line, preferably depending on a noxious emission, in particular a NOₓ value, a temperature and/or an engine load.

Depending on the performance of the whole system, which may be for example determined by measuring the NOₓ value downstream the first or second catalyst or downstream the confluence of first and second gas stream, and/or depending on the needed performance more or less exhaust has may be conducted through the first bypass exhaust line and/or the second bypass exhaust line. During operation the throughput may be adjusted according to the respective operational condition.

In a preferred embodiment of the invention the exhaust gas aftertreatment system comprises at least one conduction separation device downstream of the first catalyst. A first conduction exhaust line and a second conduction exhaust line are connected to the at least one conduction separation device. The at least one conduction separation device is configured to separate the exhaust gas leaving the first catalyst into a first gas stream for the first conduction exhaust line and a second gas stream for the second conduction exhaust line. The second catalyst is arranged in the first conduction exhaust line downstream of the conduction separation device.

One more or further catalysts and/or at least one further conduction separation device may be arranged in the first conduction exhaust line.

Thus, a bypass is provided, which provides branching off at least a part of the exhaust gas leaving the first catalyst, such that this part does not enter the second catalyst.

The first conduction exhaust line and the second conduction exhaust line may get together downstream the second catalyst, such that the first and second gas stream merge in one line.

If for example the first catalyst is designed for reducing the NOₓ completely to the Tier III level at high engine loads, the second catalyst is may not be needed in this situation. The conduction separation device downstream of the first catalyst allows for bypassing the second catalyst.

Preferably the exhaust gas aftertreatment system comprises a conduction adjustment device for setting the throughput of the first conduction exhaust line and the second conduction exhaust line. In particular, the conduction adjustment device comprises comprising at least one conduction adjustment valve for opening and closing the first conduction exhaust line and/or the second conduction exhaust line.

Hence, a desired proportion of the exhaust gas leaving the first catalyst may be guided through the first conduction exhaust line and thus through the second catalyst.

The conduction separation device downstream of the first catalyst allows for using a combination of the first and second catalyst for example only at low engine loads.

Advantageously the exhaust gas aftertreatment system comprises a control unit for controlling the throughput of the first conduction exhaust line and the second conduction exhaust line, preferably depending on a noxious emission, in particular a NOₓ value, a temperature and/or an engine load. During operation the throughput may be adjusted according to the respective operational condition.

If the NOₓ value measured downstream the second catalyst or downstream the confluence of first and second gas stream exceeds a given value or if the difference between a NOₓ value measured upstream the first catalyst and a NOₓ value measured downstream the second catalyst or downstream the confluence of first and second gas stream falls below a predetermined value, the performance may be considered too small. In this case the control unit may trigger for opening the first conduction exhaust line and/or for enhancing the first gas stream.

In a beneficial embodiment the exhaust gas aftertreatment system comprises at least one parallelization device upstream of the first catalyst and the second catalyst. A first parallel exhaust line and a second parallel exhaust line are connected to the at least one parallelization device. The at least one parallelization device is configured to separate the exhaust gas upstream the first catalyst and the second catalyst into a first gas stream for the first parallel exhaust line and a second gas stream for the second parallel exhaust line. The first catalyst is arranged in the first parallel exhaust line and the second catalyst is arranged in the second parallel exhaust line.

Preferably the exhaust gas aftertreatment system comprises a parallelization adjustment device for setting the throughput of the first parallel exhaust line and the second parallel exhaust line, preferably at least one parallel adjustment valve for opening and closing the first parallel exhaust line and/or the second parallel exhaust line.

The parallelization adjustment device allows for using either the first or the second catalyst or for using both catalysts in parallel.

The parallelization adjustment device may be configured for setting the throughput of more than two exhaust lines arranged in parallel, wherein in each exhaust line is arranged at least one catalyst. The catalysts may be of different types.

Advantageously the exhaust gas aftertreatment system comprises an control unit for controlling the throughput of the first parallel exhaust line and the second parallel exhaust line, preferably depending on a noxious emission, in particular a NOₓ value, a temperature and/or an engine load and for adjusting the throughput during operation according to the specific operation situation.

The control unit may control the throughput through the first bypass exhaust line, the second bypass exhaust line, the first conduction exhaust line, the second exhaust line, the first parallel exhaust line and/or the second parallel exhaust line.

The exhaust gas aftertreatment system may comprise a bypass separation device and a conduction separation device. The conduction separation device may be arranged in the first bypass exhaust line downstream of a first catalyst.

The second bypass exhaust line may merge with the second conduction exhaust line and the first conduction exhaust line and the second bypass exhaust line may get together downstream the second catalyst, such that gas streams merge.

The exhaust gas aftertreatment system may comprise a bypass separation device and a parallelization device. The parallelization device may be arranged in the first bypass exhaust line.

The exhaust gas aftertreatment system may comprise a conduction separation device and a parallelization device.

The conduction separation device may be arranged in the first parallel exhaust line downstream of the first catalyst. The second parallel exhaust line may merge with the first conduction exhaust line upstream of the second catalyst. With this arrangement the catalysts may be used in parallel and in series.

Alternatively, the parallelization device may be arranged downstream of the conduction separation device in the second conduction exhaust line.

The exhaust gas aftertreatment system may comprise a bypass separation device, a conduction separation device and a parallelization device.

A combination of a of conduction separation device and a parallelization device as described above may be arranged in the first bypass exhaust line.

In an advantageous embodiment the exhaust gas aftertreatment system comprises a sensor for measuring noxious emissions, such as an NOₓ-sensor, preferably two NOₓ-sensors.

The exhaust gas aftertreatment system may additionally or alternatively comprise at least one sensor for undesired side reaction products.

The exhaust gas aftertreatment system in particular may comprise three sensors, such as NOₓ-sensors, a first one arranged upstream the first and/or second catalyst, a second one arranged downstream the first catalyst, and a third one arranged downstream the second catalyst.

Preferably the sensors, such as an NOₓ-sensor, is arranged downstream the first catalyst and/or downstream the second catalyst. The NOₓ-sensor may also be arranged upstream the first and/or second catalyst.

By measuring the noxious emissions, such as the NOₓ content, at different stages of the exhaust gas aftertreatment system, the effectivity of the respective catalyst may be monitored.

Instead of a NOₓ-sensor a sensor may be used, which collects data allowing conclusions to be drawn about the NOₓ content.

Preferably the exhaust gas aftertreatment system comprises a temperature sensor for measuring the temperature of the exhaust gas.

Preferably the exhaust gas aftertreatment system comprises a control unit for comparing a measured or determined noxious emission, in particular a NOₓ value or a difference of NOₓ values, measured or determined at different stages, with a reference value or for comparing a measured temperature with a reference temperature.

Depending on the outcome of the comparison, measures can be taken. For example the amount of the injected reducing agent, such as ammonia or ammonia precursor substance, for example urea, may be altered, or the temperature of at least a part of the exhaust gas aftertreatment system may be altered, or more or less fuel penalty has to be provided.

Alternatively, the first and/or second catalyst may be bypassed or only a part of the exhaust has may be guided through the first or second catalyst, when the control unit signals that a sufficient amount of NOₓ has been reduced in the first or second catalyst, and/or when the control unit signals that a reference temperature and/or a reference load is achieved, undershot or exceeded.

The control unit may be configured for setting the bypass control valves, the conduction control valves and/or the parallelization control valves, preferably on the basis of a determination of a temperature, an engine load and/or an amount of a noxious substance, such as a NOₓ content.

The objective of the invention is also accomplished by an internal combustion engine having at least one cylinder, preferably a large vessel engine with at least one cylinder having an inner diameter of at least 200mm, comprising an exhaust gas aftertreatment system as described above.

The objective of the invention is also accomplished by a method for reducing a noxious substance, such as NOₓ emissions, of an internal combustion engine, in an exhaust gas aftertreatment system as described above, preferably in a combustion engine as previously described above. The exhaust gas is discharged through an outlet of a cylinder.

Preferably a reducing agent, such as ammonia or an ammonia precursor substance, for example urea, is dosed into the exhaust gas. Alternatively, also an ammonia water solution, urea solution, an ammonium carbonate solution, an ammonia carbamate or an urea powder may be dosed in.

The exhaust gas may be guided to a hydrolysis catalyst and the concentration of NOx in the hydrolysis catalyst is reduced by at least by at least 5%, preferably by at least by at least 10%, more preferably by at least 20%, at a temperature of at least 420°C and/or an engine load of at least 90% and/or an exhaust gas mass flow of 2-20kg/kWh, preferably 7-11kg/kWh.

The objective of the invention is also accomplished by a method for reducing a noxious emission, such as NOₓ emissions, of an internal combustion engine, preferably a combustion engine as previously described above, preferably a method as described above. The exhaust gas is discharged through an outlet of a cylinder. The method comprises the following steps. The throughput of a first parallel exhaust line and a second parallel exhaust line is controlled, preferably depending on a measured or determined noxious emission, in particular a NOₓ value, a temperature and/or an engine load.

A first parallel exhaust line and the second parallel exhaust line are connected to at least one parallelization device arranged upstream a first catalyst and a second catalyst. The first catalyst is arranged in the first parallel exhaust line and the second catalyst is arranged in the second parallel exhaust line.

Alternatively or additionally, at least a part of the exhaust gas is guided to the first catalyst. The throughput of a first conduction exhaust line and a second conduction exhaust line is controlled, preferably depending on a measured or determined noxious emission, in particular a NOₓ value, a temperature and/or an engine load. The first conduction exhaust line and the second conduction exhaust line are connected to at least one conduction separation device arranged downstream the first catalyst. A second catalyst is arranged in the first conduction exhaust line and the second conduction exhaust line bypasses the first catalyst.

The objective of the invention is also accomplished by a method for reducing a noxious emission, such as NOₓ emissions, of an internal combustion engine, preferably a combustion engine as previously described above, preferably a method as described above. The method comprises the following steps.

The throughput of a first bypass exhaust line and a second bypass exhaust line is controlled, preferably depending on a measured or determined noxious emission, in particular a NOₓ value, a temperature and/or an engine load. The first bypass exhaust line and the second bypass exhaust line are connected to at least one conduction separation device arranged upstream the first catalyst, wherein the first catalyst and the second catalyst are arranged in the first bypass exhaust line and the second bypass exhaust line bypasses the first catalyst and the second catalyst.

In a preferred embodiment of the method the content of a noxious substance, such as the NOₓ content, in the exhaust gas is measured.

The content of a noxious substance may be measured upstream the first and/or second catalyst and/or downstream the first and /or second catalyst.

Advantageously the measured or determined content of a noxious substance, such as the NOₓ content, is compared with a reference value. The reference value may be a given value, for example a NOₓ emission value due to applicable rules.

The reference value may also be a measured value. For example the NOₓ value measured upstream the first and second catalyst may be compared with the NOₓ value measured downstream stream the first or second catalyst.

Depending on the comparison more or less gas may be guided through the first catalyst and/or the second catalyst.

Hence, under a first range of operating conditions the total exhaust mass flow may be passed through only a first catalytic converter comprising a catalyst of a first type, under a second range of operating conditions the total exhaust mass flow may be passed through only a second catalytic converter comprising a catalyst of a second type, and under a third range of operating conditions the total exhaust mass flow may be passed through both (parallel or serial).

When, for example, a ship is leaving the harbour, the engine is not running at full load and the temperature of the exhaust gas may have a low starting temperature. Only a first catalyst may be used.

After some time, the load rises. The temperature and the volume of the exhaust gas rise, too. A part of the exhaust gas is guided through a second catalyst. When the temperature of the exhaust gas continues to rise, a growing part of the exhaust gas is guided through the second catalyst. Finally, when full load is achieved, all of the exhaust gas may be guided only through the second catalyst.

In the following, the invention is further explained in embodiments by means of figures:
- Figure 1:: shows a schematic view of a first example of a combustion engine;
- Figure 2:: shows a schematic view of a second example of a combustion engine;
- Figure 3:: shows a schematic view of a third example of a combustion engine;
- Figure 4:: shows a schematic view of a fourth example of a combustion engine;
- Figure 5:: shows a schematic view of a fifth example of a combustion engine;

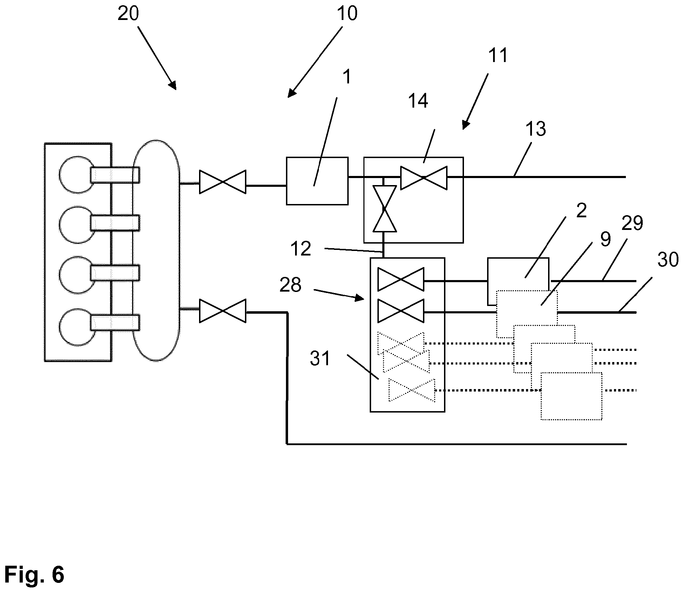

- Figure 6:: shows a schematic view of a sixth example of a combustion engine.

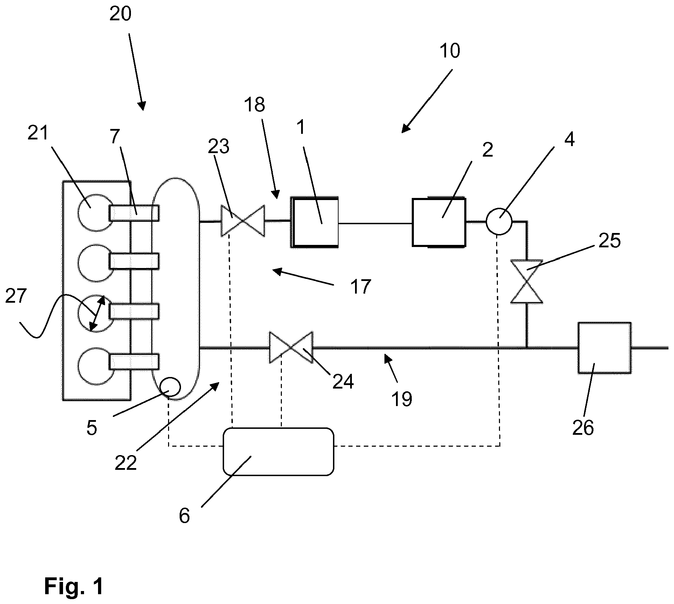

Figure 1 shows a schematic view of a first example of a combustion engine 10.

The combustion engine 20 may have four cylinders 21 and each cylinder 21 has an inner diameter 27 of at least 200mm.

Exhaust gas is discharged through an outlet 7.

The combustion engine 20 comprises an exhaust gas aftertreatment system 10 with a first catalyst 1 and a second catalyst 2 arranged downstream the first catalyst 1. The first catalyst 1 may be hydrolysis catalyst. The second catalyst 2 may be a SCR catalyst. The Vanadium content of the SCR catalyst 2 may be equal or greater than 0.3%.

The exhaust gas aftertreatment system 10 comprises two NOx-sensors 4, 5. A first NOx-sensor 4 is arranged downstream the second catalyst 2. A second NOx-sensor 5 is arranged upstream the first catalyst 1. A further NOx-sensor, not explicitly shown in the figure, may be arranged between the first catalyst 1 and the second catalyst 2.

The exhaust gas aftertreatment system 10 comprises a control unit 6 for comparing the NOx value measured with the first NOx-sensor 4 and the NOx value measured with the second NOx-sensor 5 or with a NOx value measured with a further NOx-sensor, to check the performance of the first catalyst 1 and the second catalyst 2.

The control unit 6 may also be adapted to determine the load of the engine on the basis of the speed and the fuel command.

The exhaust gas aftertreatment system 10 comprises a bypass separation device 17 upstream of the first catalyst 1. A first bypass exhaust line 18 and a second bypass exhaust line 19 are connected to the bypass separation device 17.

The bypass separation device 17 is configured to separate the exhaust gas upstream the first catalyst 1 into a first gas stream for the first bypass exhaust line 18 and a second gas stream for the second bypass exhaust line 19.

The first bypass exhaust line 18 and the second bypass exhaust line 19 may merge and the exhaust gas may be guided to a turbocharger 26. An additional valve 25 arranged downstream the second catalyst may close up the first bypass exhaust line 18 to prevent exhaust gas streaming form the second bypass exhaust line 19 in to the second catalyst.

The first catalyst 1 and the second catalyst 2 are arranged in the first bypass exhaust line 18 downstream of the separation bypass device 17.

The exhaust gas aftertreatment system 10 comprises a bypass adjustment device 22 for setting the throughput of the first bypass exhaust line 18 and the second bypass exhaust line 19.

The bypass adjustment device 22 comprises a first bypass adjustment valve 23 for opening and closing the first bypass exhaust line 18 and a second bypass adjustment valve 24 for opening and closing the second bypass exhaust line 19.

The combustion engine 20 may comprise at least one temperature sensor, in particular for measuring the temperature of the exhaust gas, not explicitly shown in the figure.

The control unit 6 may provide for controlling the throughput of the first bypass exhaust line 18 and the second bypass exhaust line 19, by sending a signal for opening and/or closing the first bypass adjustment valve 23 and the second bypass adjustment valve 24, depending on the NOx-reduction performance, a measured NOx value, a temperature and/or an engine load.

If not bypassed the exhaust gas will pass the first catalyst 1 and the second catalyst 2. Depending on the operation situation the main part of the NOₓ will wither be reduced in the first catalyst 1 or in the second catalyst 2.

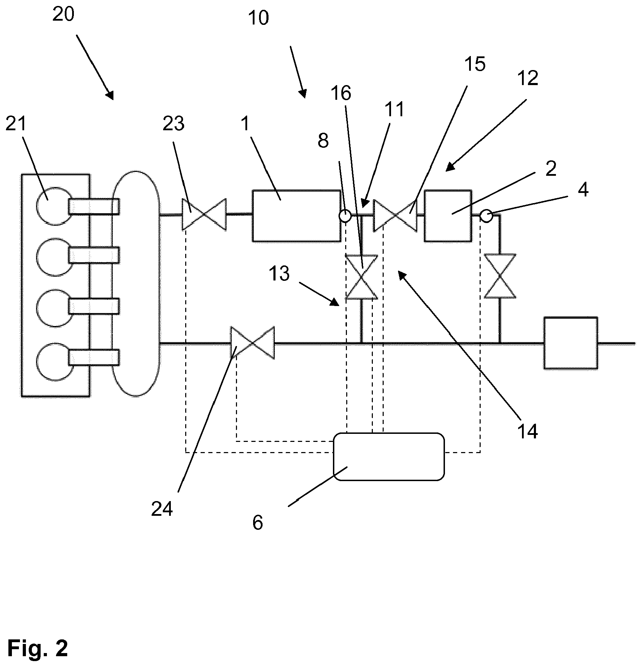

Figure 2 shows a schematic view of a second example of a combustion engine 10. The combustion engine 20 may have four cylinders 21.

The combustion engine 20 comprises an exhaust gas aftertreatment system 10 with a first catalyst 1 and a second catalyst 2 arranged downstream the first catalyst 1. The first catalyst 1 may be hydrolysis catalyst. The second catalyst 2 may be a SCR catalyst.

Alternatively, the first catalyst 1 may be a high temperature catalyst, for example a SCR catalyst with a low Vanadium content, and the second catalyst 2 may be a low temperature catalyst, for example a SCR catalyst with a high Vanadium content.

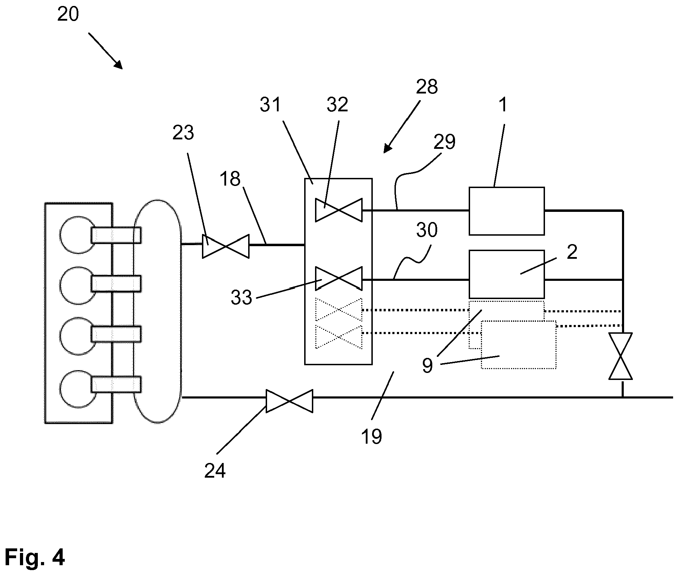

Typically the first high temperature catalyst 1 has a larger volume than the second low temperature catalyst 2. When the first catalyst 1 and the second catalyst 2 are used in series, the undesired N₂O generation is minimized as compared to an individual use of one of the catalysts 1, 2 (see figure 4). Downstream the first catalyst only a small amount of NH₃ is left, as the biggest part has been used for NOₓ reduction, leading only to a very low N₂O formation.

The exhaust gas aftertreatment system 10 comprises a conduction separation device 11 downstream of the first catalyst 1, in particular a hydrolysis catalyst, wherein a first conduction exhaust line 12 and a second conduction exhaust line 13 are connected to the at least one conduction separation device 11.

The conduction separation device 11 is configured to separate the exhaust gas leaving the first catalyst 1 into a first gas stream for the first conduction exhaust line 12 and a second gas stream for the second conduction exhaust line 13. The second catalyst 2 is arranged in the first conduction exhaust line 12 downstream of the conduction separation device 11.

The exhaust gas aftertreatment system 10 comprises an adjustment device 14 for setting the throughput of the first conduction exhaust line 12 and the second conduction exhaust line 13. The adjustment device 14 comprises a first adjustment valve 15 for opening and closing the first conduction exhaust line 12 and a second adjustment valve 16 for opening and closing the second conduction exhaust line 13.

The exhaust gas aftertreatment system 10 may comprise two NOx-sensors 4, 8. A first NOx-sensor 4 is arranged downstream the second catalyst 2. A second NOx-sensor 8 is arranged downstream the first catalyst 1.

A further sensor, not explicitly shown in the figure may be arranged upstream the first catalyst 1.

The exhaust gas aftertreatment system 10 comprises a control unit 6 for controlling the throughput of the first conduction exhaust line 12 and the second conduction exhaust line 13. The control unit may send a signal for opening and closing the first conduction adjustment valve 15 and a second conduction adjustment valve 16, for example depending on the NOx value measured at the second NOx-sensor 8, which is measure for the NOx-reduction performance of the first catalyst 1, for example a hydrolysis catalyst.

The control unit may also send a signal for opening and/or closing a first bypass adjustment valve 23 and a second bypass adjustment valve 24, such that at least a part of the exhaust gas may bypass the first catalyst 1 and the second catalyst 2.

By setting the valves 23, 24, 15, 16 it can be decided if the exhaust gas passes only the first catalyst 1 or only the second catalyst 2 or both catalysts 1, 2 in series. The setting of the valves can be chosen depending of the operation situation, for example depending on the temperature or the engine load.

The combustion engine 20 may comprise at least one temperature sensor, in particular for measuring the temperature of the exhaust gas, not explicitly shown in the figure.

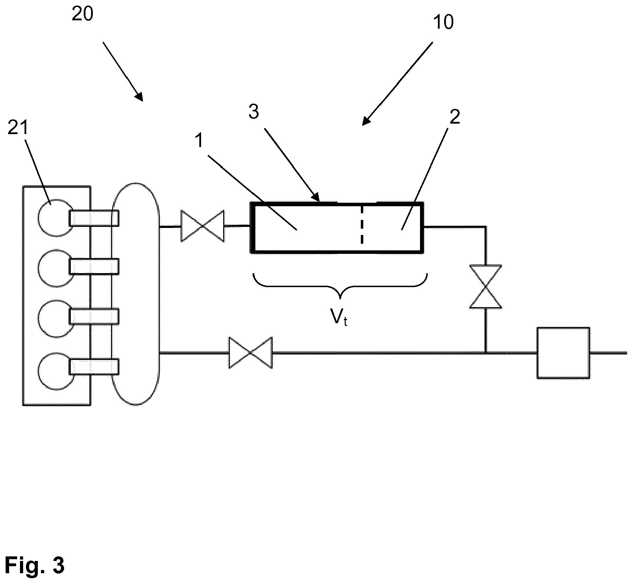

Figure 3 shows a schematic view of a third example of a combustion engine 20. The combustion engine 20 may have four cylinders 21.

The combustion engine 20 comprises an exhaust gas aftertreatment system 10 with a first catalyst 1 and a second catalyst 2 arranged downstream the first catalyst 1. The first catalyst 1 may be a hydrolysis catalyst. The second catalyst 2 may be a SCR catalyst.

The hydrolysis catalyst 1 and the SCR catalyst 2 are arranged on the same catalyst substrate 3.

The total volume Vₜ of the hydrolysis catalyst 1 and the SCR catalyst 2 for reducing a given amount of NOx is equal or smaller than the volume of a stand-alone SCR catalyst for reducing the same amount of NOx. The total volume Vₜ of the hydrolysis catalyst 1 and the SCR catalyst 2 is equal or smaller than 500 1/MW, preferably 400 l/MW.

Figure 4 shows a schematic view of a fourth example of a combustion engine 20. The combustion engine 20 may have four cylinders 21.

The combustion engine 20 comprises an exhaust gas aftertreatment system 10 with a first catalyst 1 and a second catalyst 2 arranged in parallel. The first catalyst 1 may be SCR catalyst with a lower Vanadium content. The second catalyst 2 may be a SCR catalyst with a higher Vanadium content.

Further catalysts 9 may be arranged in parallel. The catalysts may be SCR catalysts with different Vanadium contents.

The exhaust gas aftertreatment system 10 comprises a parallelization device 28 upstream of the first catalyst 1 and the second catalyst 2, wherein a first parallel exhaust line 29 and a second parallel exhaust line 30 are connected to the at least one parallelization device 31.

The parallelization device 28 is configured to separate the exhaust gas into a first gas stream for the first parallel exhaust line 29 and a second gas stream for the second parallel exhaust line 30. The first catalyst 1 is arranged in the first parallel exhaust line 29 and the second catalyst 2 is arranged in the second parallel exhaust line 30.

The exhaust gas aftertreatment system 10 comprises a parallelization adjustment device 31 for setting the throughput of the first parallel exhaust line 29 and the second parallel exhaust line 30. The parallelization adjustment device 31 comprises a first parallelization adjustment valve 32 for opening and closing the first parallel exhaust line 29 and a second parallelization adjustment valve 33 for opening and closing the parallel exhaust line 30.

The exhaust gas aftertreatment system 10 also comprises a first bypass adjustment valve 23 and a second bypass adjustment valve 24, forming a bypass separation device, such that at least a part of the exhaust gas may bypass the first catalyst 1 and the second catalyst 2.

By setting the valves 23, 24, 31, 32 it can be decided if the exhaust gas passes only the first catalyst 1 or only the second catalyst 2 or both catalysts 1, 2 in parallel. The setting of the valves can be chosen depending of the operation situation, for example depending on the temperature or the engine load.

The combustion engine 20 may comprise at least one temperature sensor, in particular for measuring the temperature of the exhaust gas, not explicitly shown in the figure.

For example for higher loads and higher temperatures the valves are set, such that the first catalyst 1, such as a SCR catalyst with a low or no Vanadium content, is used, whereas for lower loads and low temperatures the second catalyst2, such as a SCR catalyst with a higher Vanadium content, is used.

In an intermediate regime both catalysts 1, 2 can be used.

Also, for high loads both catalysts 1, 2 can be used to avoid a large size second catalyst 2 with a slight penalty on the side reactions.

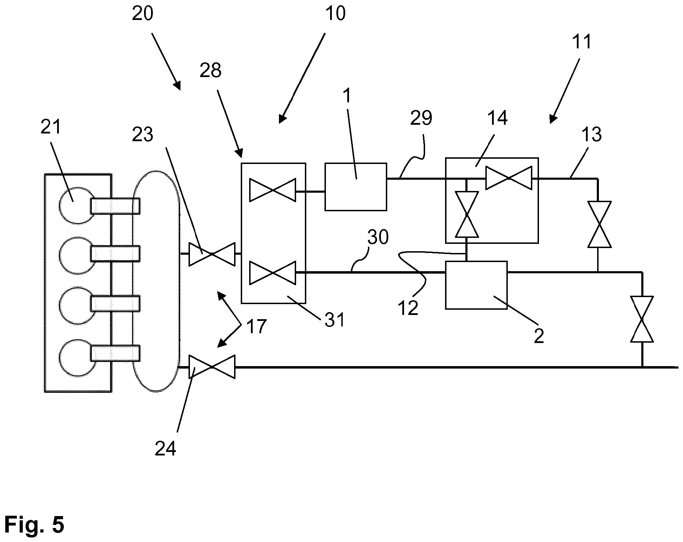

Figure 5 shows a schematic view of a fifth example of a combustion engine 20. The combustion engine 20 may have four cylinders 21.

The combustion engine 20 comprises an exhaust gas aftertreatment system 10 with a first catalyst 1 and a second catalyst 2.

The exhaust gas aftertreatment system 10 comprises a parallelization device 28 upstream of the first catalyst 1 and the second catalyst 2, wherein a first parallel exhaust line 29 and a second parallel exhaust line 30 are connected to the at least one parallelization device 31.

The parallelization device 28 is configured to separate the exhaust gas into a first gas stream for the first parallel exhaust line 29 and a second gas stream for the second parallel exhaust line 30. The first catalyst 1 is arranged in the first parallel exhaust line 29 and the second catalyst 2 is arranged in the second parallel exhaust line 30.

The exhaust gas aftertreatment system 10 comprises a parallelization adjustment device 31 for setting the throughput of the first parallel exhaust line 29 and the second parallel exhaust line 30.

The exhaust gas aftertreatment system 10 further comprises a conduction separation device 11 downstream of the first catalyst 1, in particular a hydrolysis catalyst, wherein a first conduction exhaust line 12 and a second conduction exhaust line 13 are connected to the at least one conduction separation device 11.

The conduction separation device 11 is configured to separate the exhaust gas leaving the first catalyst 1 into a first gas stream for the first conduction exhaust line 12 and a second gas stream for the second conduction exhaust line 13. The second catalyst 2 is arranged in the first conduction exhaust line 12 downstream of the conduction separation device 11.

The exhaust gas aftertreatment system 10 comprises an conduction adjustment device 14 for setting the throughput of the first conduction exhaust line 12 and the second conduction exhaust line 13.

The exhaust gas aftertreatment system 10 also comprises a first bypass adjustment valve 23 and a second bypass adjustment valve 24, forming a bypass separation device 17, such that at least a part of the exhaust gas may bypass the first catalyst 1 and the second catalyst 2.

There may also be a control unit (not explicitly shown in this figure) that controls the status of the parallelization device 31, the conduction separation device 11 and the bypass separation device 17 to determine, whether the first catalyst 1 and/or the second catalyst 2 are used, whether the first catalyst 1 and the second catalyst 2 are used in series and/or in parallel, or whether the catalysts 1, 2 are used at all.

Be controlling the status of the parallelization device 31, the conduction separation device 11 and the bypass separation device 17 the percentage of exhaust gas passing the first catalyst 1 and the second catalyst 2 can be determined.

Figure 5 shows a schematic view of a fifth example of a combustion engine 20.

The exhaust gas aftertreatment system 10 comprises a conduction separation device 11 downstream of the first catalyst 1, for example a hydrolysis catalyst. A first conduction exhaust line 12 and a second conduction exhaust line 13 are connected to the at least one conduction separation device 11. The throughput of the first conduction exhaust line 12 and the second conduction exhaust line 13 may be set by a conduction adjustment device 14.

A parallelization device 28 is arranged in the first conduction exhaust line 12 downstream of the conduction separation device 11.

The parallelization device 28 is configured to separate the exhaust gas into a first gas stream for the first parallel exhaust line 29 and a second gas stream for the second parallel exhaust line 30.

The parallelization device 28 may be configured to separate the exhaust gas into a further gas streams for further parallel exhaust lines comprising further catalysts.

A second catalyst 2 is arranged in the first parallel exhaust line 29 and a further catalyst 9 is arranged in the second parallel exhaust line 30.

The second catalyst 2 and the further catalyst 9 may be SCR catalysts with different Vanadium contents.

The exhaust gas aftertreatment system 10 comprises a parallelization adjustment device 31 for setting the throughput of at least the first parallel exhaust line 29 and the second parallel exhaust line 30.

All examples of the combustion engine may comprise at least one dosing unit for a reducing agent, not shown in the figures.

## Claims

1. Exhaust gas aftertreatment system (10) for a combustion engine (20) having at least one cylinder (21), preferably a large vessel engine with at least one cylinder (21) having an inner diameter (27) of at least 200mm,
comprising a first catalyst (1) and a second catalyst (2), wherein
- the first catalyst has a chemical composition different from the second catalyst;
and/or
- the first catalyst (1) has its optimal operation performance, in particular a NOₓ reducing performance, at a first engine load value and the second catalyst (2) has optimal operation performance, in particular a NOₓ reducing performance, at a second engine load value, wherein the first engine load value is different from the second engine load value;
and/or
- the first catalyst (1) has its optimal operation performance, in particular a NOₓ reducing performance, at a first temperature and the second catalyst (2) has its optimal operation performance, in particular a NOₓ reducing performance, at a second temperature, wherein the first temperature is different from the second temperature
and/or
- the first catalyst (1) is capable for reducing a noxious substance, in particular a NOₓ content, due to a first chemical reaction and the second catalyst (2) is capable for reducing a noxious substance, in particular a NOₓ content, due to a second chemical reaction, wherein the first chemical reaction is different from the second chemical reaction.

2. Exhaust gas aftertreatment system (10) according to claim 1
wherein
the exhaust gas aftertreatment system (10) comprises at least one bypass separation device (17) upstream of the first catalyst (1) and the second catalyst (2),
- wherein a first bypass exhaust line (18) and a second bypass exhaust line (19) are connected to the at least one bypass separation device (17),
- wherein the at least one bypass separation device (17) is configured to separate the exhaust gas upstream the first catalyst (1) and the second catalyst (2) into a first gas stream for the first bypass exhaust line (18) and a second gas stream for the second bypass exhaust line (19), and
- wherein the first catalyst (1) and the second catalyst (2) are arranged in the first bypass exhaust line (18) downstream of the separation bypass device (17).

3. Exhaust gas aftertreatment system (10) according to claim 2 wherein the exhaust gas aftertreatment system (10) comprises a bypass adjustment device (22) for setting the throughput of the first bypass exhaust line (18) and the second bypass exhaust line (19), preferably at least one bypass adjustment valve (23, 24) for opening and closing the first bypass exhaust line (18) and/or the second bypass exhaust line (19).

4. Exhaust gas aftertreatment system (10) according to claim 2 or 3 wherein the exhaust gas aftertreatment system (10) comprises an control unit (6) for controlling the throughput of the first bypass exhaust line (17) and the second bypass exhaust line (18), preferably depending on a noxious emission, in particular a NOₓ value, a temperature and/or an engine load.

5. Exhaust gas aftertreatment system (10) according to claim any of claims 1-4,
wherein the exhaust gas aftertreatment system (10) comprises at least one conduction separation device (11) downstream of the first catalyst (1)
- wherein a first conduction exhaust line (12) and a second conduction exhaust line (13) are connected to the at least one conduction separation device (11),
- wherein the at least one conduction separation device (11) is configured to separate the exhaust gas leaving the first catalyst (1) into a first gas stream for the first conduction exhaust line (12) and a second gas stream for the second conduction exhaust line (13), and
- wherein the second catalyst (2) is arranged in the first conduction exhaust line (12) downstream of the conduction separation device (11).

6. Exhaust gas aftertreatment system (10) according to claim 5 wherein the exhaust gas aftertreatment system (10) comprises an conduction adjustment device (14) for setting the throughput of the first conduction exhaust line (12) and the second conduction exhaust line (13), preferably comprising at least one conduction adjustment valve (15, 16) for opening and closing the first conduction exhaust line (12) and/or the second conduction exhaust line (13).

7. Exhaust gas aftertreatment system (10) according to claim 5 or 6 wherein the exhaust gas aftertreatment system (10) comprises a control unit(6) for controlling the throughput of the first conduction exhaust line (12) and the second conduction exhaust line (13), preferably depending on a noxious emission, in particular a NOₓ value, a temperature and/or an engine load.

8. Exhaust gas aftertreatment system (10) according to any of the preceding claims wherein
the exhaust gas aftertreatment system (10) comprises at least one parallelization device (28) upstream of the first catalyst (1) and the second catalyst (2),
- wherein a first parallel exhaust line (29) and a second parallel exhaust line (30) are connected to the at least one parallelization device (28),
- wherein the at least one parallelization device (28) is configured to separate the exhaust gas upstream the first catalyst (1) and the second catalyst (2) into a first gas stream for the first parallel exhaust line (29) and a second gas stream for the second parallel exhaust line (30), and
- wherein the first catalyst (1) is arranged in the first parallel exhaust line (29) and the second catalyst (2) is arranged in the second parallel exhaust line (30).

9. Exhaust gas aftertreatment system (10) according to claim 8 wherein the exhaust gas aftertreatment system (10) comprises a parallelization adjustment device (31) for setting the throughput of the first parallel exhaust line (29) and the second parallel exhaust line (30), preferably at least one parallel adjustment valve (32, 33) for opening and closing the first parallel exhaust line (29) and/or the second parallel exhaust line (30).

10. Exhaust gas aftertreatment system (10) according to claim 8 or 9 wherein the exhaust gas aftertreatment system (10) comprises an control unit (6) for controlling the throughput of the first parallel exhaust line (29) and the second parallel exhaust line (30), preferably depending on a noxious emission, in particular a NOₓ value, a temperature and/or an engine load.

11. Exhaust gas aftertreatment system (10) according to any of the preceding claims wherein the the exhaust gas aftertreatment system (10) comprises
an NOₓ-sensor (4, 5, 8), preferably two or three NOₓ-sensors (4, 5, 8).

12. Exhaust gas aftertreatment system (10) according to claim 11 wherein the exhaust gas aftertreatment system (10) comprises a control unit (6) for comparing a measured or determined noxious emission, in particular a NOₓ value, with a reference value.

13. Internal combustion engine (20) having at least one cylinder (21), preferably a large vessel engine with at least one cylinder (21) having an inner diameter (27) of at least 200mm, comprising an exhaust gas aftertreatment system (10) as claimed in claims 1-12.

14. Method for reducing a noxious emission, such as NOₓ emissions, of an internal combustion engine, in an exhaust gas aftertreatment system (10) according to one of claims 1-12, wherein exhaust gas is discharged through an outlet (7) of a cylinder (21).

15. Method for reducing a noxious emission, such as NOₓ emissions, of an internal combustion engine, in an exhaust gas aftertreatment system (10) wherein exhaust gas is discharged through an outlet (7) of a cylinder (21), preferably according to claim 14, comprising the steps of:
- Controlling the throughput of a first parallel exhaust line (29) and a second parallel exhaust line (30), preferably depending on a measured or determined noxious emission, in particular a NOₓ value, a temperature and/or an engine load, wherein the first parallel exhaust line (29) and the second parallel exhaust line (30) are connected to at least one parallelization device (28) arranged upstream a first catalyst (1) and a second catalyst (2) and wherein the first catalyst (2) is arranged in the first parallel exhaust line (29) and the second catalyst (2) is arranged in the second parallel exhaust line (30)
and/or
- Guiding at least a part of the exhaust gas to a first catalyst (1);
- Controlling the throughput of a first conduction exhaust line (12) and a second conduction exhaust line (12), preferably depending on a measured or determined noxious emission, in particular a NOₓ value, a temperature and/or an engine load, wherein the first conduction exhaust line (12) and the second conduction exhaust line (13) are connected to at least one conduction separation device (11) arranged downstream the first catalyst (11) and wherein an second catalyst (2) is arranged in the first conduction exhaust line (12) and the second conduction exhaust line (13) bypasses the first catalyst (2).

16. Method for reducing a noxious emission, such as NOₓ emissions, of an internal combustion engine, in an exhaust gas aftertreatment system (10) wherein exhaust gas is discharged through an outlet (7) of a cylinder (21), preferably according to claim 14 or 15, comprising the steps of:
- Controlling the throughput of a first bypass exhaust line (18) and a second bypass exhaust line (19), preferably depending on a measured or determined noxious emission, in particular a NOx value, a temperature and/or an engine load, wherein the first bypass exhaust line (18) and the second bypass exhaust line (19) are connected to at least one conduction separation device (17) arranged upstream the first catalyst (1), wherein the first catalyst (1) and the second catalyst (2) are arranged in the first bypass exhaust line (18) and the second bypass exhaust line (19) bypasses the first catalyst (1) and the second catalyst (2).
